# EUROPEAN PATENT APPLICATION

(11) **EP 2 194 323 A2**
(43) Date of publication of application: **09.06.2010**
(21) Application number: 09275116.3
(22) Date of filing: 30.11.2009
(51) Int. Cl.: F23D 14/32, F23D 14/02

(54) **A hydrogen-oxygen combustion burner**

(30) Priority: 02.12.2008 KR 20080121185
(71) Applicant: Hwang, Boo-Sung, Kyung-ki do (KR)
(72) Inventor: Hwang, Boo-Sung, Kyung-ki do (KR)
(74) Representative: Hocking, Adrian Niall

(57) **Abstract**

This invention is about a hydrogen-oxygen combustion burner which contains a gas line (L) that provides hydrogen-oxygen mixed gas, the body (10) in a sealed form to block any foreign oxygen from entering, combusting nozzle (20) with multiple crater holes (23) toward the upper body (10), the distributing center (30) formed inside the body (10) distributing hydrogen-oxygen mixed gas provided by the gas line (L) to the crater holes.

## Description

### Technical Field

The inventions is about hydrogen-oxygen mixed gas combusting burner which enables the application of hydrogen-oxygen mixed gas to the real life electric machines.

### Background

Hydrogen-oxygen mixed-gas generating system is made to produce hydrogen and oxygen from electrolyzed water and to gain pollution-free energy source, hydrogen-oxygen mixed gas. Water with small amount of electrolytes is provided to the storage with positive (+) and negative (-) electrodes and electrolyzed by direct current. Hydrogen and oxygen produced is at the ratio of 2 : 1 and hydrogen is formed as bubbles on the surface of negative (-) electrode and oxygen in bubbles on the positive (+) electrode. Hydrogen and Oxygen produced can be mixed and combusted. Also hydrogen- oxygen gas mixture does not produce any pollutants when ignited, making it an important eco-friendly energy source.

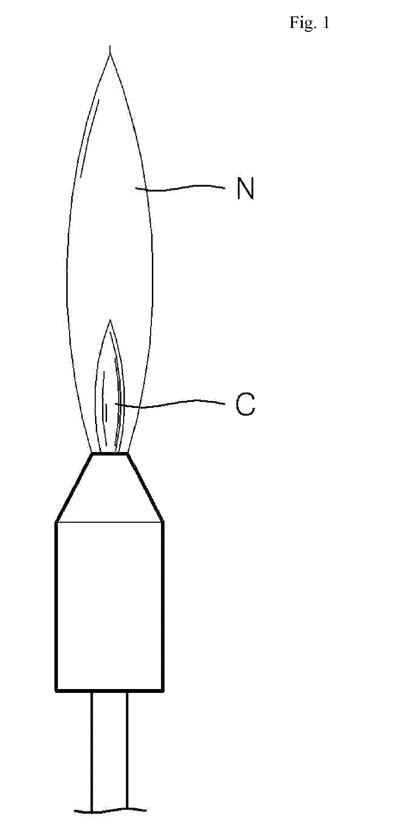

When hydrogen-oxygen mixed gas is combusted, the fire forms a long but tiny tube because the size of the fire decreases due to the oxygen inside the gas and the water formed as a result of the combustion of the mixed gas. Also the combusting fire ( C ) of the hydrogen-oxygen gas has a nucleus (N) at the center of the fire as drawn in the diagram 1, the nucleus's (N) temperature is about 3000 to 6000 °C.

Most of the gas machines such as boiler or gas range used at home have melting point of 2000°C but because the nucleus of the hydrogen-oxygen mixed gas combustion fire is between 3000 - 6000 °C, anywhere the fire touches, the part melts down. Also, because fire is in the shape of a stick, it cannot heat up a large area. As a result, the hydrogen-oxygen mixed gas combustion fire can be used on limited areas, making it impractical.

### Problem to be solved

The invention is created to solve the problem mentioned above: to eliminate the nucleus from the combustion fire of hydrogen-oxygen mixed gas and to provide hydrogen-oxygen mixed gas combusting burner to apply the hydrogen-oxygen gas in real life.

### Brief Description of the Drawings

Diagram 1 is a sketch to explain how nucleus is formed when hydrogen-oxygen mixed gas is combusted.
Diagram 2 is a sketch on the hydrogen-oxygen mixed gas combusting burner based on the invention.

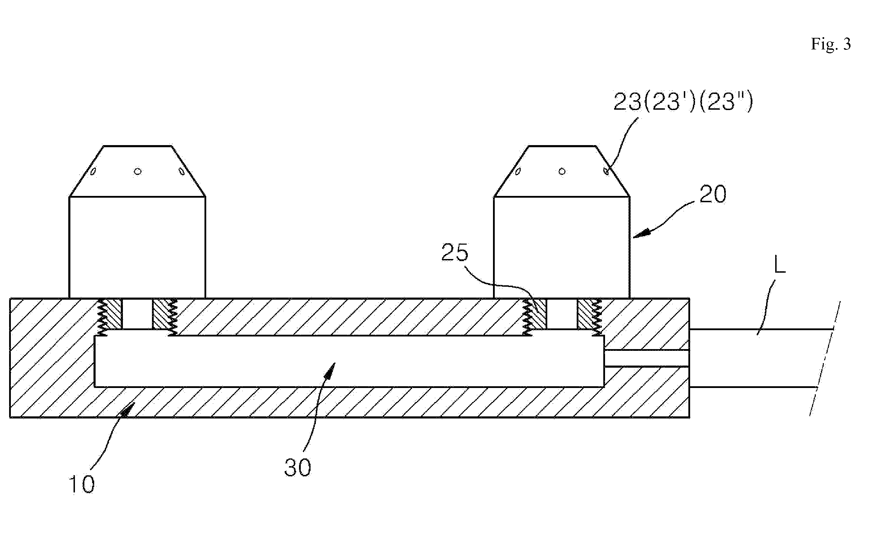

Diagram 3 is a sectional sketch along diagram 2's III-III' line.
Diagram 4 is a sketch to describe widening diameters of the crater holes on the combusting nozzle on diagram 2.
Diagram 5 is a sketch to describe shrinking diameters of the crater holes on the combusting nozzle on diagram 2.
Diagram 6 is a sketch on the hydrogen-oxygen mixed gas combusting burner in example 2.
Diagram 7 is a sectional sketch along the diagram 6's VII-VII'
Diagram 8 is a sketch on the hydrogen-oxygen mixed gas combusting burner in example 3.
Diagram 9 is a sketch to describe widening diameters of the crater holes on the slope. Diagram 10 is a sketch to describe shrinking diameters of the crater holes on the slope.
Diagram 11 is a sketch on the hydrogen-oxygen mixed gas combusting burner in example 4.
Diagram 12 is a sectional view along Diagram 11's XII-XII line.

### The Method of Solution

To solve the problems, the hydrogen-oxygen mixed gas combusting burner implicating the invention in example 1 has gas line (L) that provides hydrogen-oxygen mixed gas, the body (10) in a sealed form to block any foreign oxygen from entering, combusting nozzle (20) with multiple crater holes (23) toward the upper body (10), the distributing center(30) formed inside the body (10) distributing hydrogen-oxygen mixed gas provided by the gas line (L) to the crater holes, multiple combusting nozzles (20) around the body (10) in circle sine the body is cylinder. The combusting nozzle (20) contains the circular body of nozzle (21), a slope formed on the upper part of the body of the nozzle (21), crater holes (23')(23") on the slope making an obtuse triangle, distributing center(30) formed perpendicular to the interior of the body of the nozzle (21) distributing the hydrogen-oxygen mixed gas to the crater holes (23')(23"), the connecting screw (25) formed at the lower part of the body of the nozzle (21) connected with the connecting hole (15) at the upper part of the body (21), and the crater holes (23') become larger in its size toward the slope (22) and they (23") become smaller toward the slope (22).

In example 2, the hydrogen-oxygen mixed gas combusting burner consist of the gas line (L) providing hydrogen-oxygen gas, sealed body(110) to block any oxygen from outside, the combusting nozzle (20) with multiple crater holes connected to the upper part of the body (110), and the distributing center(130) inside the body of the nozzle (21) distributing hydrogen-oxygen mixed gas flowing from the gas line (L) to crater holes. The body (110) is a long stick which the combusting nozzles (20) are lined up on it. The combusting nozzle (20) is composed of cylindrical body of the nozzle (21), the slope(22) on the upper part of the body (21), the crater holes (23')(23") on the slope(22) extending away from each other, the nozzle distributing hole (24) built perpendicular to the interior of the nozzle distributing the hydrogen-oxygen mixed gas to the crater holes (23')(23"), and the connecting screw (25) connecting to the connecting hole (115) on the lower part of the body (110) and the craters (23') become larger and the craters (23") become smaller toward the slope (22).
In example 3 of the hydrogen-oxygen mixed gas combusting burner, it consist of the gas line (L) providing hydrogen-oxygen gas, sealed body (210) to block any oxygen from outside, slope(220) on the upper part of the body (210), multiple crater holes on the slope (220), and the distributing center(230) inside the body of the nozzle (21) distributing hydrogen-oxygen mixed gas flowing from the gas line (L) to the crater holes (223')(223"). The body (210) is a flat cylinder in which the crater holes (223')(223")form circles on the slope (220). The craters (223') become larger and the craters (223") become smaller toward the slope(220).

In example 4 of the hydrogen-oxygen mixed gas combusting burner, it consist of the gas line (L) providing hydrogen-oxygen gas, sealed body (310) to block any oxygen from outside, slope(320) on the upper part of the body (310), multiple crater holes on the slope (320), and the distributing center(330) inside the body of the nozzle (21) distributing hydrogen-oxygen mixed gas flowing from the gas line (L) to the crater holes (223')(223"). The body (310) is a long block and the slopes (32)) are place at each edge of the body (310) and the multiple crater holes (223')(223") are placed in a line. The crater holes (223') get larger and the crater holes (223") get smaller as they get near the slope (320).

### The Effect

According to the hydrogen-oxygen combusting burner using the invention, the flame caused by hydrogen-oxygen mixed gas combustion does not create a nucleus with high temperature but increase the volume of the flame. This means that the hydrogen-oxygen can be used in the machines in everyday life such as boiler or gas range.

### Specific explanation for realization of the invention

Following explanation is based on the sketches attached.

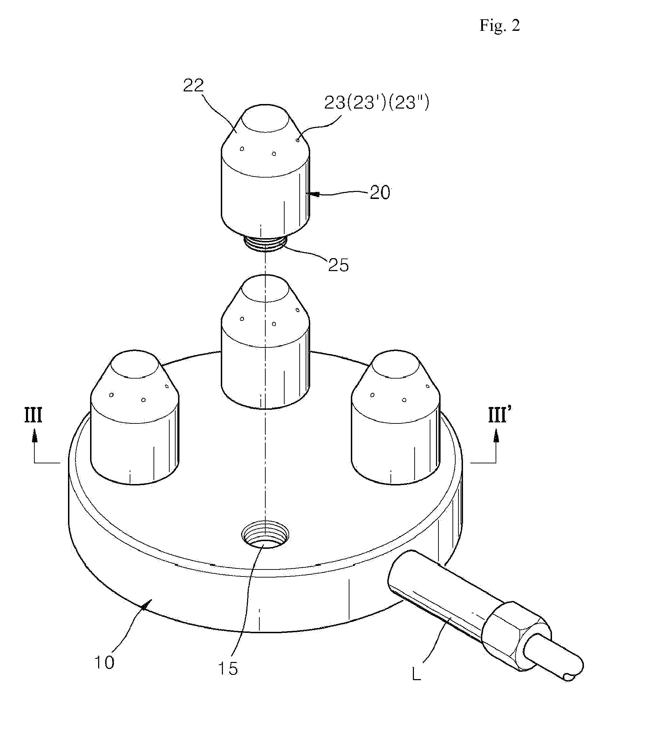

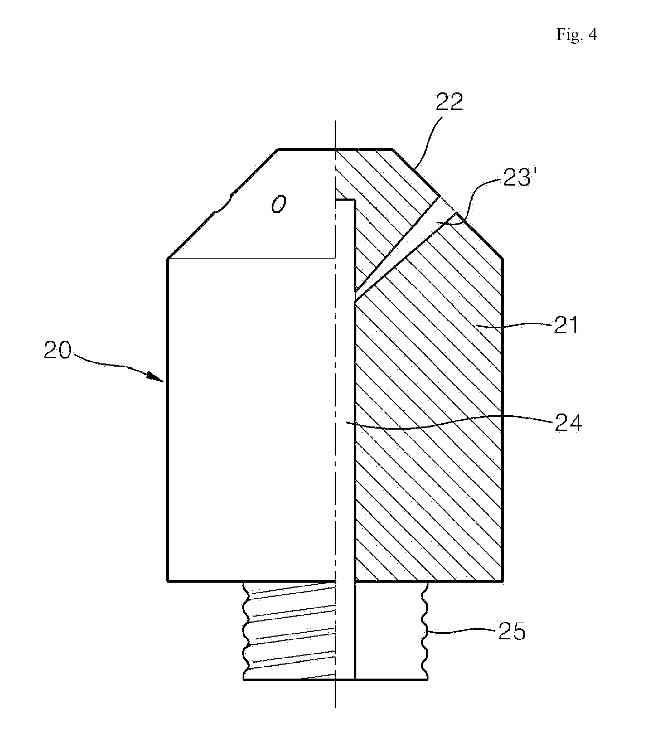

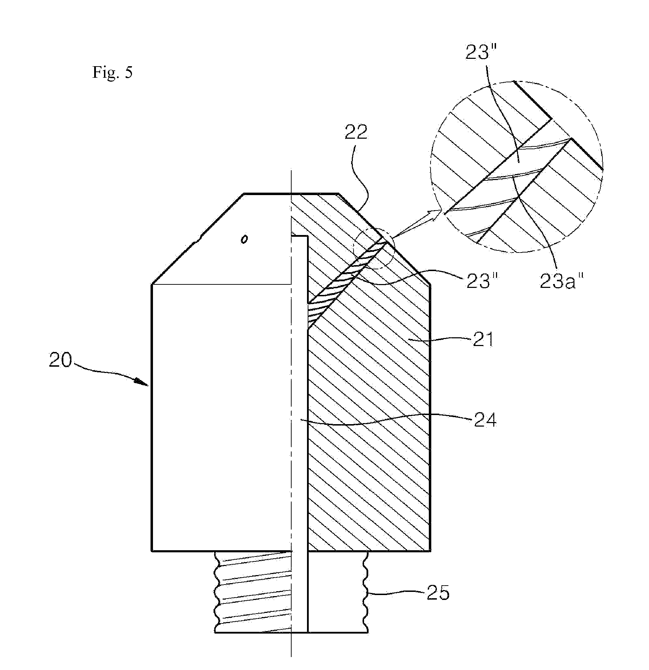

Diagram 2 is a sketch of the hydrogen-oxygen combusting burner in example 1, diagram is a sectional sketch of diagram 2's III-III', diagram 4 is a ketch to describe the widening diameter of the crater holes towards the slope, and diagram 5 is to describe decreasing diameter of the crater holes towards the slope.

As drawn, in example 1, the sealed body (10) and the gas line (L) to supply hydrogen-oxygen mixed gas without any outside oxygen, combusting nozzle (20) with multiple crater holes connected to the upper part of the body, and distributing center (30) inside the body (10) distributing the hydrogen-oxygen mixed gas from the gas line (L) to crater holes.

The body (10) is in a flat cylinder form and the combusting nozzles (20) form a circle on the body (10). In the example, four combusting nozzles (20) are positioned to make a circle on the body (10). The crater holes either have constant diameter or various diameters; the crater holes with constant diameter are marked as number 23 and the crater holes with varying diameters are numbered as 23' or 23". Also, by increasing or decreasing the number of the crater holes (23)(23')(23"), the power of the flame.

The body (10) is made of stainless steel or alloy steel that stands well even in the high temperature and has four connecting holes (15) on the upper part connecting the connecting screws (25) of the combusting nozzle (20) that will be later described.

The distributing center (30) distributes the hydrogen-oxygen mixed gas supplied by the gas line (L) to the nozzle distributing hole (24), which would be distributing to the crater holes (23). The important things is that because the mixed gas includes oxygen, there shouldn't be any oxygen supplied to the distributing center from outside and in order to accomplish that, the distributing center (30) should be formed inside the body (10) and completely isolated from outside.

Combusting nozzle (20) is composed of the round body of the nozzle (21) the slope (22) on the upper part of the body of the nozzle (21), the crater holes (23)(23')(23") in widening angles on the slope (22), the nozzle distributing hole (24) perpendicular to the inner part of the body of the nozzle (21) distributing hydrogen-oxygen mixed gas to the crater holes (23)(23')(23"), and the connecting screws (25) on the lower part of the body of the nozzle (21).

A number of crater holes (23)(23')(23"), preferably six, are formed on the slope and each form widening angle from each other, making hydrogen-oxygen mixed gas to spray into large area, and forming a flame on a large space.

The crater hole (23) should have a diameter between 0.2mm - 2 mm to minimize the generation of the nucleus. The diameter of the crater hole (23) is in mm unit, the jet pressure of the hydrogen-oxygen mixed gas is small, creating a partial blend in with the outside air during the combustion. The hydrogen-oxygen mixed gas sprayed with little pressure is diluted with the outside air, minimizing the nucleus when ignited.

The diameter of the crater hole on the nozzle distribution center (24) and the diameter of the hole on the slope (22) have different structures.

The crater holes (23') have increasing length of diameter as they get near the slope (22) to completely prevent the nucleus from forming. The diameter of the nozzle distributing hole (24) and the crater hole (23') is between 0.1 - 0.5 mm and the diameter of the crater hole (23') on the slope (22) is between 1-3 mm. the most preferred diameter of the crater hole (23') on the nozzle distributing hole (24) is 0.2mm and the diameter of the crater hole (23') is 2mm. according to the structure, the hydrogen-oxygen mixed gas traveling from the nozzle distributing hole (24) will decrease its jet pressure and be diluted by the outside air, eliminating the nucleus as it goes through the crater hole (23').

Also, to prevent the nucleus from originating, the diameters of the crater holes (23') can decrease in its length toward the slope (22) and the spiral groove (23a") is formed inside the crater hole (23"). The diameters of the crater holes (23") become smaller toward the slope (22) or due to stepped pulley. The crate holes (23') next to the nozzle distributing hole (24) have a diameter between 1 -3 mm and the crater holes (23") on the slope (22) have a diameter between 0.1 and 0.5mm. The most preferred diameter of the crater hole (23') next to the nozzle distributing hole (24) is 0.2 mm and the diameter of the crater hole next to the slope (22) is 0.2 mm. according to the structure, the hydrogen-oxygen mixed gas supplied from the nozzle distributing hole (24) is swirled going through the crater hole (23") and the spiral groove (23a") and mixed with outside air rapidly and diluted so the nucleus with high temperature does not occur.

According to the structure, the hydrogen-oxygen mixed gas supplied through the gas line (L) flows into the distributing center (30) in the body (10) and distributed to the nozzle distribution hole (24) of the combusting nozzle (20) then sprayed through the crater holes (23)(23')(23"). The hydrogen-oxygen mixed gas forms a combustion flame producing heat. If the diameter of the crater hole (23) is in mm unit or the diameters of the crater holes (23')(23") next to the nozzle distributing hole (24) and the slope (22) vary from each other, the high temperature nucleus does not form while combustion.

The following is the explanation for example 2.

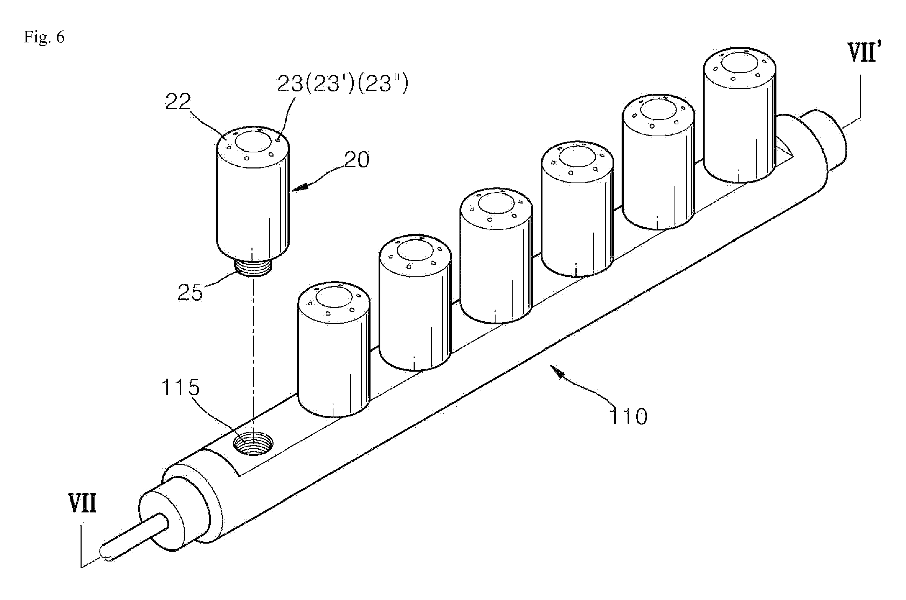

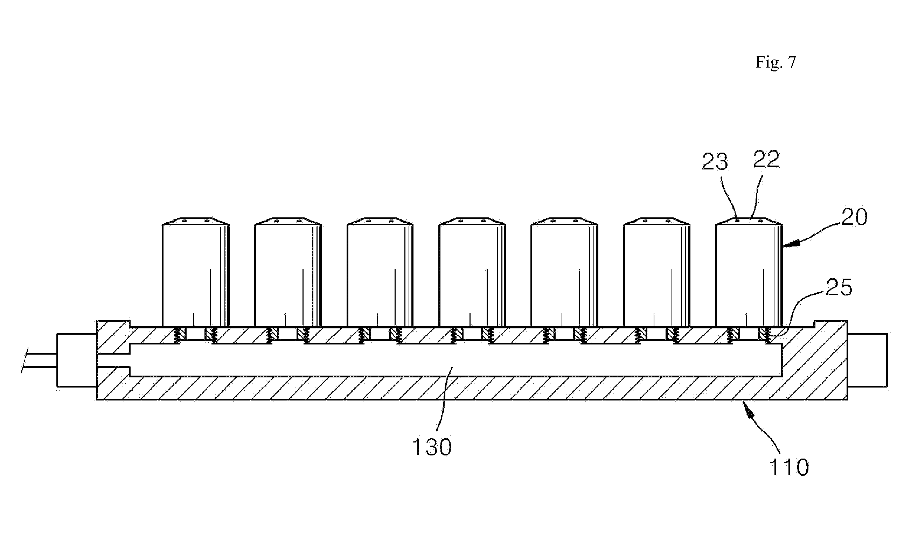

Diagram 6 is the sketch of the example 2 of the hydrogen-oxygen mixed gas combusting burner following the invention and diagram 7 is a sectional sketch along the diagram 6's VII-VII'. Here, same signs used are same parts that carry same function.

As drawn, the hydrogen-oxygen mixed gas combusting burner built according to the invention in example 2 has the gas line (L) and the sealed body (110) supplying the hydrogen -oxygen mixed gas without any inflowing outside air, the combustion nozzle (20) with multiple cater holes on the upper part of the body (110), and the distributing center (13) in the body (110) which distributes hydrogen-oxygen mixed gas flowing from the gas line (L). The body (110) is a long pipe and a number of combusting nozzles (20) are lined up on the body (110). In the example there are seven combusting nozzles (20) on the body (110).

The body (110) is made up of stainless steel or alloy steel which last even in high temperature and on the top, there are seven connecting holes (115) which connect with the connecting screws (25) of the combusting nozzle (20) positioned opposite to each other making a circle.

The distributing center (130) distributes the hydrogen-oxygen gas supplied from the gas line (L) to the nozzle distributing hole (24) of the combusting nozzle (20), which would distribute the mixed gas to the crater holes (23). The important thing is the oxygen is already included in the mixed gas so there should not be any outside air flowing into the distributing center (130) so the distributing center (13) should be installed inside the body (110).

The combusting nozzle in the example is little differently described as the combusting nozzle (20) described in the example 1 but is using the same sign for the technical composition is same and detailed explanation is omitted for it has already been explained before.

According to the structure explained above, the hydrogen-oxygen mixed gas supplied through the gas line (L) goes through the distributing center (130) in the body (110) and distributed to the nozzle distributing hole (24) and the gas is sprayed through distributed crater holes (23)(23')(23"). The hydrogen-oxygen mixed gas form combustion flame, produce the heat but the nucleus of the flame does not occur.

The following is the explanation of the example 3.

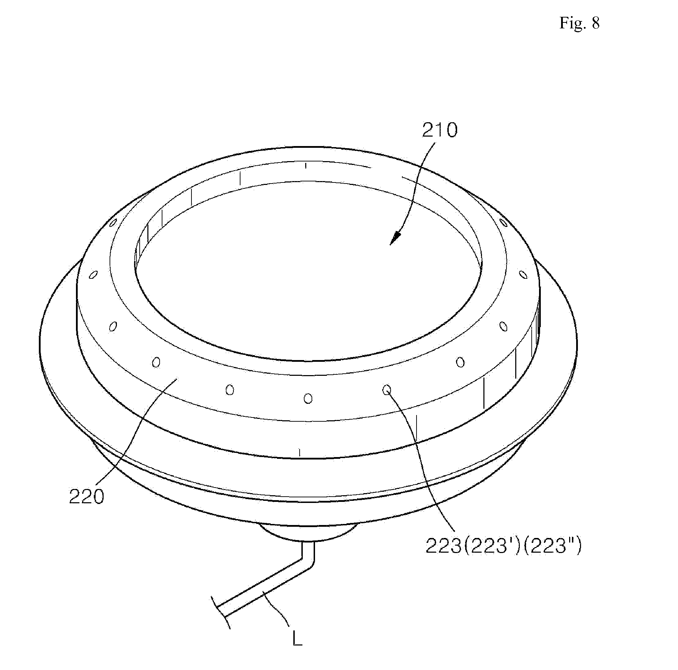

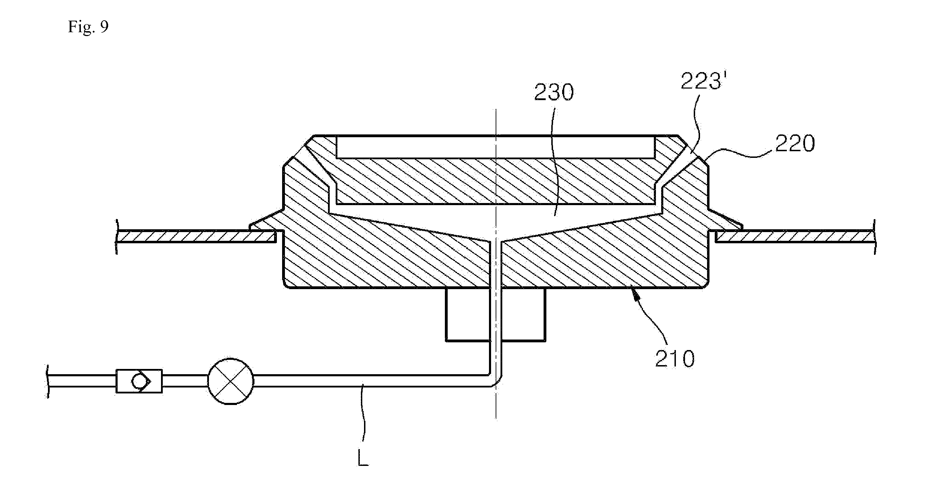

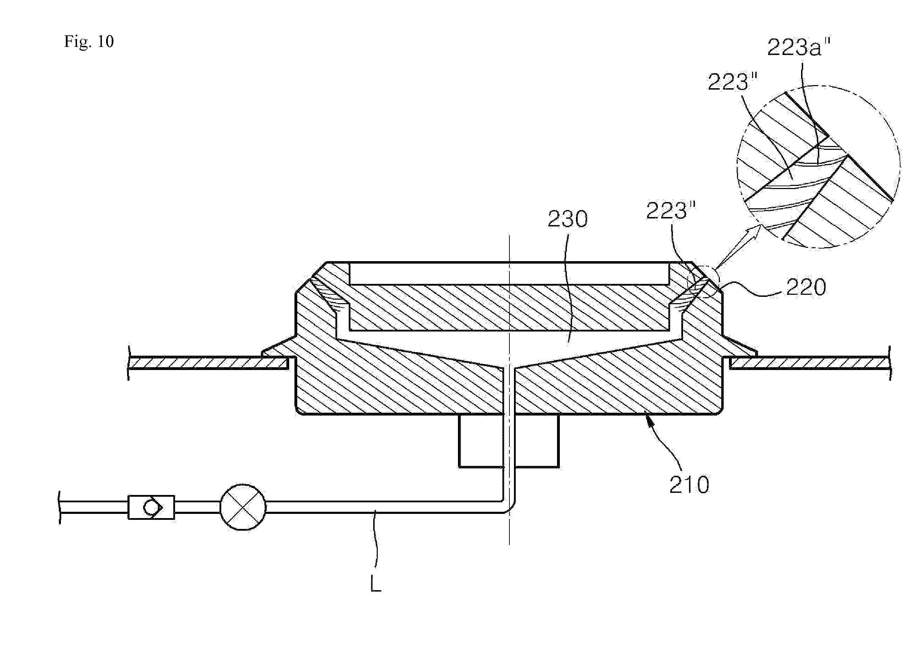

Diagram 8 is a sketch of the hydrogen-oxygen mixed gas combusting burner, diagram 9 is a sketch to describe crater holes become larger toward the slope on the combusting burner on diagram 8, and diagram 10 is a sketch to describe crater holes' diameters getting smaller toward the slope on the combusting burner on diagram 8.

As drawn, in example 3, the hydrogen-oxygen mixed gas combusting burner has gas line (L) and sealed body (210) supplying hydrogen-oxygen mixed gas without allowing entrance of any outside air, slope (220) place on the upper part of the body (210), number of crater holes on the slope (220), and distributing center (230) inside the body (210) distributing hydrogen-oxygen mixed gas supplied from the gas line (L) to the crater holes. The body (210) is formed as a flat cylinder and the crater holes (223) are placed as a circle on the slope (220).

The crater holes have either constant or different diameters; the crater holes with constant diameter are marked as 223 and the ones with different diameters as 223' or 223". The crater holes (223)(223')(223") can control the power of the combusting flame by increasing or decreasing their numbers.

The body (210) is made of stainless steel or alloy steel that can stand in the high temperature and the slopes wrap it around on the upper edges.

The distributing center (230) distributes hydrogen-oxygen mixed gas to the crater holes (223)(223')(223"). The distributing center (230) should be built inside the body (210) and isolated to block any outside air from coming in.

Numbers of the crater holes (223)(223')(223") are formed on the slope (22) and each form widening angle from each other. As a result, the hydrogen-oxygen mixed gas would be sprayed to a large area creating a big fire.

The crater hole (223) should have a diameter of 0.2mm -2mm in order to minimize the possibility of creating a nucleus of high temperature. Because the diameter of the crater hole (223) is in mm unit, the jet pressure is very low, leading the hydrogen-oxygen mixed gas to blend with outside air. Hydrogen-oxygen mixed gas sprayed in a low pressure and partially diluted with the air, the nucleus almost always does not occur during the combustion.

On the other hand, to eliminate the possibility of having a nucleus, the diameter of the crater hole on the distributing center (230) and that of the crater hole on the slope (22) have different diameters.

The crater holes (23') get wider and bigger toward the slope (22) to remove the nucleus. The crater hole (223') adjacent to the distributing center (230) has a diameter between 0.1 - 0.5 mm and the crater hole (223') next to the slope (220) has a diameter between 1-3 mm. the most preferred diameter for the crater hole(223') adjoined with the distributing center (230) is 0.2 mm and for the crater hole(223') next to the slope is 2mm. Due to the structure, the pressure for the hydrogen-oxygen gas falls dramatically going through the crater hole (22') and partially mixed with outside and diluted so the nucleus does not appear when combusted.

The crater holes (223") has a decreasing diameter closer to the slope (220) to eliminate the nucleus and a spiral groove (223"a) can form inside the crater hole (223"). The crater hole (223") adjacent to the distributing center (230) has a diameter between 1-3 mm and the crater hole (223") next to the slope (220) has a diameter between 0.1 - 0.5 mm. the most preferred diameter for the crater hole (223") next to the distributing center (230) is 2mm and the diameter for the one adjacent to the slope (220) is 0.2mm. Due to the structure, the hydrogen-oxygen mixed gas flowing from the distributing center (230) gets swirled going through the crater hole (223") and the spiral groove (223a") and rapidly blends with the outside air trying to get out from the diminished exit on the slope (220). The mixed gas sprayed after the swirling is diluted as it quickly blends with outside air so there is no ultra high temperature flame when ignited.

The following is the explanation for the example 4.

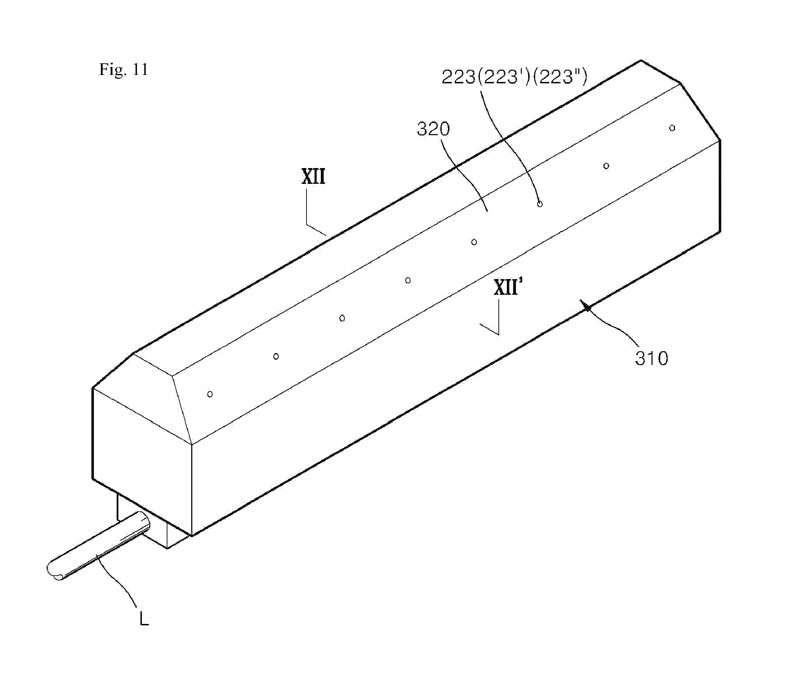

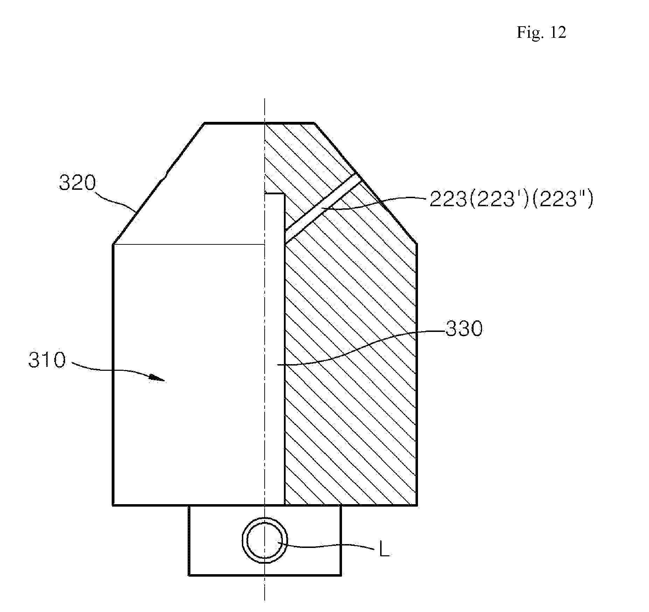

Diagram 11 is a sketch of the hydrogen-oxygen mixed gas combusting burner using the invention. Diagram 12 is a sectional sketch on the diagram 11's XII-XII'. The same signs used as in the example 3 have same function.

As drawn, the hydrogen-oxygen mixed gas combusting burner using the invention has gas line (L) and sealed body (310) supplying hydrogen-oxygen mixed gas without allowing entrance of any outside air, slope (320) place on the upper part of the body (310), number of crater holes on the slope (320), and distributing center (330) inside the body (310) distributing hydrogen-oxygen mixed gas supplied from the gas line (L) to the crater holes. The body (310) is a long block and the slopes (320) are placed at both edges of the body (310) and the crater holes (223) are lined up along the slope.

The body (310) is made up of stainless steel or alloy steel which last even in high temperature and a pair of slopes 932) is formed on the edges of upper body.

The distributing center (330) distributes hydrogen-oxygen mixed gas to the crater holes (223). The distributing center (330) should be built inside the body (310) and isolated to block any outside air from coming in.

In the example, crater holes are drawn slightly different from the crater holes (223)(223')(223") in example 3, however, have same technical compositions so the signs are same and further explanation is omitted for it already has been.

The invention is explained based on the examples experimented but keep in mind that this is only few of the possibilities and anyone with sufficient knowledge in the field would understand that variations can be applied.

### Signs regarding important parts of the figures

- 10,110 -: body
- 15,115 -: connecting screws
- 20 -: combusting nozzle
- 21 -: body of the nozzle
- 22 -: slope
- 23,23',23" -: crater hole
- 23a" -: spiral groove
- 24 -: nozzle distributing hole
- 25 -: connecting hole
- 30,130 -: distributing center
- 210,310 -: body
- 220,320 -: slope
- 223,223',223" -: crater holes
- 223a" -: spiral groove
- 230,330 -: distributing center

## Claims

1. A hydrogen-oxygen combustion burner comprising a gas line (L) that provides hydrogen-oxygen mixed gas, the body (10) in a sealed form to block any foreign oxygen from entering, combusting nozzle (20) with multiple crater holes (23) toward the upper body (10), the distributing center(30) formed inside the body (10) distributing hydrogen-oxygen mixed gas provided by the gas line (L) to the crater holes;
and multiple combusting nozzles (20) around the body (10) in circle sine the body is cylinder;
the combusting nozzle (20) including the circular body of nozzle (21), a slope formed on the upper part of the body of the nozzle (21), crater holes (23')(23") on the slope making an obtuse triangle, distributing center (30) formed perpendicular to the interior of the body of the nozzle (21) distributing the hydrogen-oxygen mixed gas to the crater holes (23')(23"), the connecting screw (25) formed at the lower part of the body of the nozzle (21) connected with the connecting hole (15) at the upper part of the body (21);
and the crater holes (23') become larger in its size toward the slope (22) or they (23") become smaller toward the slope (22).

2. A hydrogen-oxygen combustion burner comprising the gas line (L) providing hydrogen-oxygen gas, sealed body (110) to block any oxygen from outside, the combusting nozzle (20) with multiple crater holes connected to the upper part of the body (110), and the distributing center (130) inside the body of the nozzle (21) distributing hydrogen-oxygen mixed gas flowing from the gas line (L) to crater holes; and the body (110) is a long stick which the combusting nozzles (20) are lined up on it;
the combusting nozzle (20) includes cylindrical body of the nozzle (21), the slope(22) on the upper part of the body (21), the crater holes (23')(23") on the slope(22) extending away from each other, the nozzle distributing hole (24) built perpendicular to the interior of the nozzle distributing the hydrogen-oxygen mixed gas to the crater holes (23')(23"), and the connecting screw (25) connecting to the connecting hole (115) on the lower part of the body (110) and the craters (23') become larger and the craters (23") become smaller toward the slope (22);
and the crater holes (23') become larger in its size toward the slope (22) or they (23") become smaller toward the slope (22).

3. A hydrogen-oxygen combustion burner as claimed in claim 1 and claim 2, wherein the spiral groove (23a") is formed on the inner surface of the crater hole (23").

4. A hydrogen-oxygen combustion burner comprising a gas line (L) providing hydrogen-oxygen gas, sealed body(210) to block any oxygen from outside, the slope (220) at the top of the body (210) with multiple crater holes, and the distributing center (230) inside the body (210) distributing hydrogen-oxygen mixed gas flowing from the gas line (L) to crater holes;
and the crater holes(223')(223") are formed in circle along the slope (220) since the body (210) is cylinder;
The crater holes (223') become larger in its size toward the slope (220) or they (223") become smaller toward the slope (220).

5. A hydrogen-oxygen combustion burner comprising a gas line (L) providing hydrogen-oxygen gas, sealed body(310) to block any oxygen from outside, the slope(320) at the top of the body(310) with multiple crater holes, and the distributing center(330) inside the body (310) distributing hydrogen-oxygen mixed gas flowing from the gas line (L) to crater holes;
a body (310) is formed as a long toy block and the crater holes (223')(223") are formed along the slope (320) at both edges of the body;
the crater holes (223') become larger in its size toward the slope (320) or they (223") become smaller toward the slope (320).
